# EUROPEAN PATENT APPLICATION

(11) **EP 1 100 182 A1**
(43) Date of publication of application: **16.05.2001**
(21) Application number: 99309021.6
(22) Date of filing: 12.11.1999
(51) Int. Cl.: H02K 5/18, H02K 9/06

(54) **Fan cooled electric motors with increased thermal dissipation**

(71) Applicant: GENERAL ELECTRIC COMPANY, Schenectady, NY 12345 (US)
(72) Inventor: Crowell, James Robert, Huntertown, Indiana 46748 (US)
(74) Representative: Goode, Ian Roy

(57) **Abstract**

An electric motor (100) includes a housing (102) and a fan (138) mounted external to the housing to provide an airflow (140) over the housing. An external surface (120) of the housing includes a plurality of fins (122) and an internal surface (118) of the housing includes a plurality of pins (160). The fins and pins increase heat dissipation of the motor. A plurality of air deflectors (144) guide at least a portion of the air over the opposite fan end of the housing. An internal baffle (156) is attached to the housing and directs an air stream over a portion of a stator (124) and the over the pins.

## Description

This invention relates generally to electric motors and, more particularly, to fan cooled electric motors with increased thermal dissipation.

Totally enclosed fan cooled electric motors include a stator and a rotor that are enclosed to prevent damage from harmful substances in the operating environment. The motors include a motor driven external fan mounted on the rotor shaft at the non-drive end. The fan is housed within a fan shield to direct cooling air over the outer surface of the motor housing.

An internal fan is formed at the axial ends of the rotor to promote air circulation within the motor and to increase heat dissipation from the internal components to the ambient environment. The circulation of air encourages the dissipation of heat from the internal components to the housing, e.g., the end shields.

Totally enclosed fan cooled electric motors are constructed such that the externally mounted fan moves air over the external surfaces of the housing and removes heat primarily by convection. The losses that are generated within the machine are transported by a combination of convection and conduction to the internal surfaces of the housing. The thermal dissipation of the motor is the combined result of the internal convection and conduction along with the external convection. Since there is no flow of external air through the motor, the motors, particularly in sizes above several hundred horsepower, are in most cases temperature limited in their rating.

Accordingly, it would be desirable to provide a totally enclosed fan cooled electric motor with increased heat dissipation to allow increased power output from a fixed size machine. In addition, it would be desirable to increase the thermal dissipation and fabricate a motor of smaller size and similar power compared to known totally enclosed fan cooled electric motors.

These and other objects may be attained by a totally enclosed fan cooled electric motor that includes a housing with a shell including first and second ends. A first end shield is mounted to the first shell end and a second end shield is mounted to the second shell end. The first and second end shields include bearing supports that have bearings therein. The housing further includes an external surface with a plurality of fins and an internal surface with a plurality of pins. The fins and pins increase heat dissipation of the motor.

A stator is mounted in the housing and includes a stator core having a bore therethrough. A rotor is rotatably mounted in the housing and extends through the stator bore. The rotor includes a rotor core having a bore therethrough and a substantially straight shaft extending through the rotor core bore. The rotor shaft is rotatably supported by the bearings. The stator and the rotor are positioned closer to the first end shield than to the second end shield. The rotor core includes an end ring on each axial end. The end rings are formed into internal fans that promote the circulation of air over at least a portion of the internal surface of the housing. An internal baffle is attached to an internal portion of the housing. The air stream from at least one of the internal fans is directed by the baffle to the pins.

The motor also includes a fan mounted to the rotor shaft and positioned external to the first end shield. The external fan does not include a backing plate. The fan is housed within a fan shield that directs the flow of air from the fan to the external surface of the shell. The external fins are arranged in quadrant patterns that include a plurality of quadrant corners and at least one air guide located at each quadrant corner. The housing further includes a plurality of air deflectors to guide at least a portion of the air over a face of the second end shield.

The totally enclosed fan cooled electric motor has increased heat dissipation due to the inclusion of pins internal to the housing. In addition, the air guides and air deflectors located on the outside of the housing increase the heat dissipation by directing more of the air from the external fan over the external surface of the housing. These increases in heat dissipation allow more horsepower to be obtained from smaller motors.

Embodiments of the invention will now be described, by way of example, with reference to the accompanying drawings, in which:
Figure 1 is a schematic view of a cross section of a totally enclosed fan cooled electric motor in accordance with one embodiment of the present invention.
Figure 2 is a schematic view of a fan well known in the art.
Figure 3 is a partial schematic view of the motor shown in Figure 1.
Figure 4A is a partial schematic view of a totally enclosed fan cooled electric motor illustrating a radial fin arrangement.
Figure 4B is a schematic view of the fins shown in Figure 4A along a length of the motor.
Figure 5A is a partial schematic view of the motor shown in Figure 1 illustrating a quadrant fin arrangement.
Figure 5B is a schematic view of the fins shown in Figure 5A along a length of the motor shown in Figure 1.
Figure 6 is a top view of a first end shield of the electric motor shown in Figure 1.
Figure 7 is a cross-section of the end shield shown in Figure 6 along A-A.
Figure 8 is a schematic view of pins on an internal surface of the motor housing shown in Figure 1.
Figure 9 is a schematic view of ribs on an internal surface of a totally enclosed fan cooled electric motor housing as is well known in the art.
Figure 10 is a partial schematic view of an electric motor with a conduit box as is well known in the art.
Figure 11 is a side view of a motor in accordance with another embodiment.
Figure 12 is an end view of the motor shown in Figure 11.
Figure 13 is a partial schematic view of an axially centered stator core as is well known in the art.
Figure 14 is a partial schematic view of an offset stator core in accordance with a further embodiment.
Figure 15 is a graph of the external velocity and convection axial temperature gradient along an electric motor.

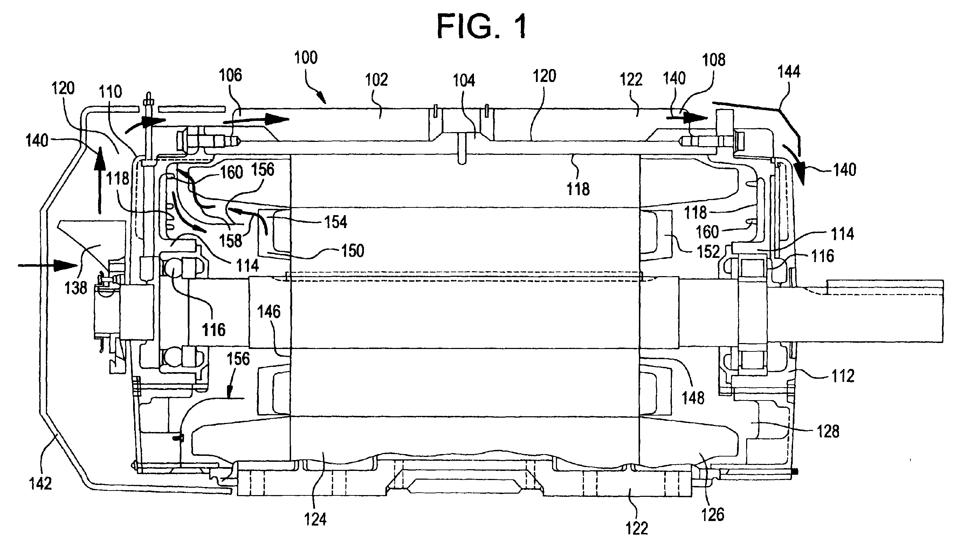

Figure 1 is a schematic view of a totally enclosed fan cooled electric motor 100 including a housing 102 with a shell 104 having a first end 106 and a second end 108. Housing 102 also includes a first end shield 110 and a second end shield 112. First end shield 110 is mounted to shell first end 106 and second end shield 112 is mounted to shell second end 108. First end shield 110 and second end shield 112 include bearing supports 114 that house bearings 116. Housing 102 further includes an internal surface 118 and an external surface 120. External surface 120 includes a plurality of fins 122 as will be described in greater detail below.

Motor 100 also includes a stator 124 mounted within housing 102 and a stator core 126 having a bore 128 through core 126. A rotor 130 is rotatably mounted within housing 102 and extends through stator bore 128. Rotor 130 includes a rotor core 132 and a rotor bore 134 through rotor core 132. A substantially straight shaft 136 extends through rotor bore 134 and is rotatably supported by bearings 116. A fan 138 is positioned on rotor shaft 136 external to end shield 110. Fan 138 provides an airflow 140 that is directed over external surface 120 of housing 102 along fins 122. A fan shield 142 is positioned around fan 138 and directs airflow 140 onto shell 104 and along fins 122. In one embodiment, fan shield 142 is connected to end shield 110. A plurality of air deflectors 144 are located on external surface 120 and deflect airflow 140 onto end shield 112 as airflow 140 exits second end 108 of shell 104. In one embodiment, air deflectors 144 are secured to housing 102, e.g., bolted. Alternatively, air deflectors 144 could be formed from housing external surface 120 and could be unitary therewith. In one embodiment, air deflectors 144 include three straight portions connected at angles to have an overall bent configuration. Of course, other configurations could include a single bent portion, two or four or more straight portions, or two straight portions connected by a bent portion. Fins 122 and air deflectors 144 are described below in greater detail.

Rotor core 132 includes a first end 146 and a second end 148. Each end 146, 148 includes an end ring 150, 152 respectively. In one embodiment, end ring 150 is formed into an internal fan 154. An internal baffle 156 is positioned in an air stream 158 of fan 154 to direct air stream 158 to increase heat dissipation from internal components of motor 100. Baffle 156 directs air stream 158 from fan 154 to at least a portion of stator core 124, e.g., an end of stator core 124. Air stream 158 is then directed over at least a portion of first end shield 110 and then back to fan 154. The circular flow of air stream 158 from fan 154 to stator core 124 to end shield 110 and then back to fan 154 increases the dissipation of heat from stator core 124 to the ambient environment. Alternatively, another baffle could be located between end ring second end 152 and end shield 112.

Heat dissipation can be further increased by including a plurality of pins 160 on housing 102. Pins 160 are formed on internal surface 118 and project axially from end shield 110. In addition, pins 160 could also be formed on end shield 112.

Pins 160 will be described in greater detail below. In one embodiment, baffle 156 is secured to internal surface 118 of housing 102, e.g., bolted or welded. Alternatively, baffle 156 could be cast unitary with housing 102. In one embodiment, baffle 156 includes two straight portions connected by a bent portion. Of course, other configurations could include a single bent portion or multiple straight portions.

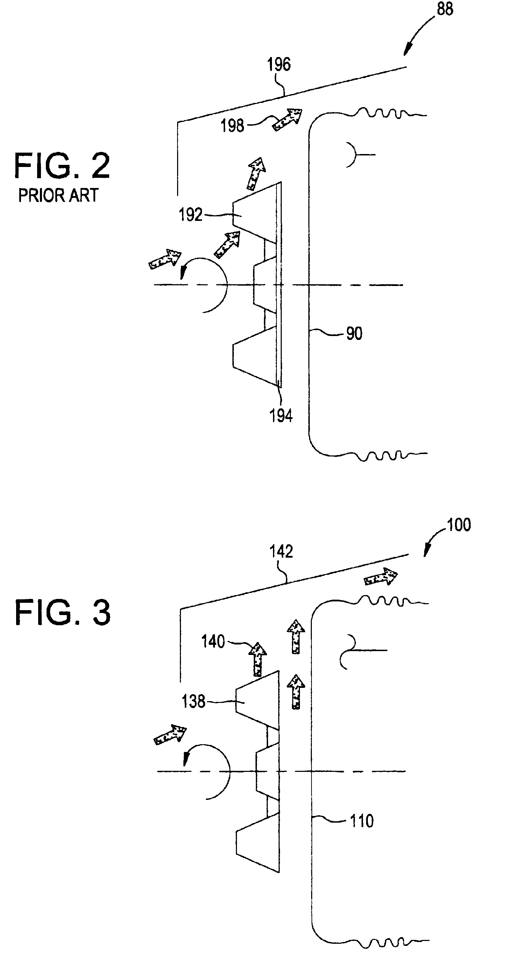

Figure 2 is a schematic view of a well known fan end of a totally enclosed fan cooled electric motor 162. Motor 162 includes an end shield 164, a fan 166, a fan backing plate 168, and a fan shield 170. Fan 166 is connected to a rotor shaft (not shown) extending through end shield 164. As fan 166 rotates, an airflow 172 exits fan 166 and is directed over the external surface of the motor housing (not shown).

Figure 3 is a schematic view of the first end 106 of motor 100 according to one embodiment. The fan end of motor 100 includes end shield 110, fan 138, and fan shield 142. Fan shield 142 and end shield 110 guide, or redirect, airflow 140 over the housing (not shown) and increase the amount of airflow 140 exiting fan shield 142 and usefully flowing over the housing fins (not shown). Specifically, the fins on end shield 110 can be arranged to guide or straighten airflow 140 moving over end shield 110 and the housing. The effectiveness of the end shield fins is increased by eliminating the backing plate from fan 138 and utilizing the external surface of end shield 110 as the backing plate.

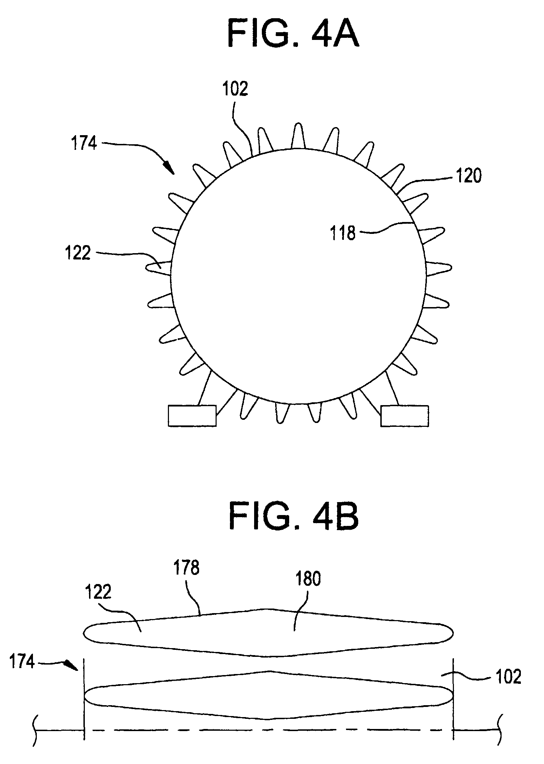

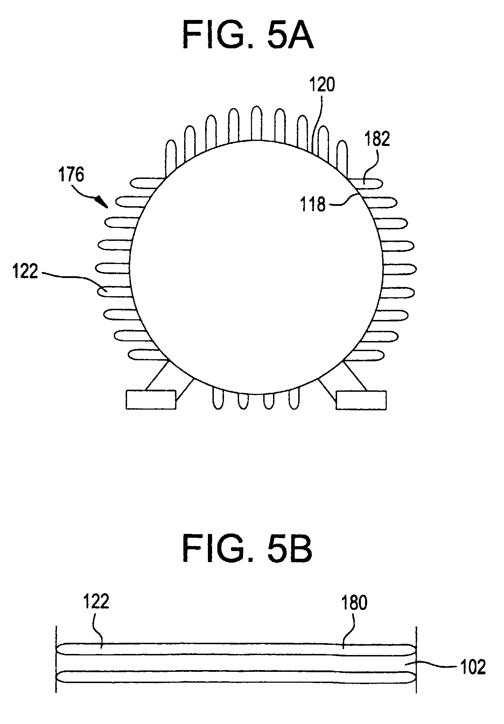

Figures 4A, 4B and 5A, 5B are schematic views of radially arranged fins 174 and quadrant arranged fins 176, respectively. Housing 102 can be cast with either radially arranged fins 174 or quadrant arranged fins 176. Casting techniques require that a draft angle be present. In the case of radially arranged fins 174, a draft angle 178 is in the axial direction resulting in a relative fin thickness 180 that increases over the length of housing 102. Alternatively, fin thickness 180 can increase over a partial length dependent upon the casting mold or pattern utilized. When the pattern or mold includes quadrant arranged fins 176, a draft angle 182 is in the approximate radial direction, with very little or no draft angle required in the axial direction. When the relative length of housing 102 is short and the spacing of fins 122 is relatively wide, the inclusion of radially arranged fins 174 offers advantages of increased fin coverage for housing 102. However, as the relative axial length of housing 102 increases compared to the spacing of fins 122, the required draft angle results in increased fin thickness 180 which tends to inhibit the flow of air between fins 122 and reduces the total effective surface area. Increasing the effective surface area of housing 102 requires the usage of many fins 122 relatively closely spaced. Thus the usage of quadrant fin arrangements 176 results in higher effective surface areas.

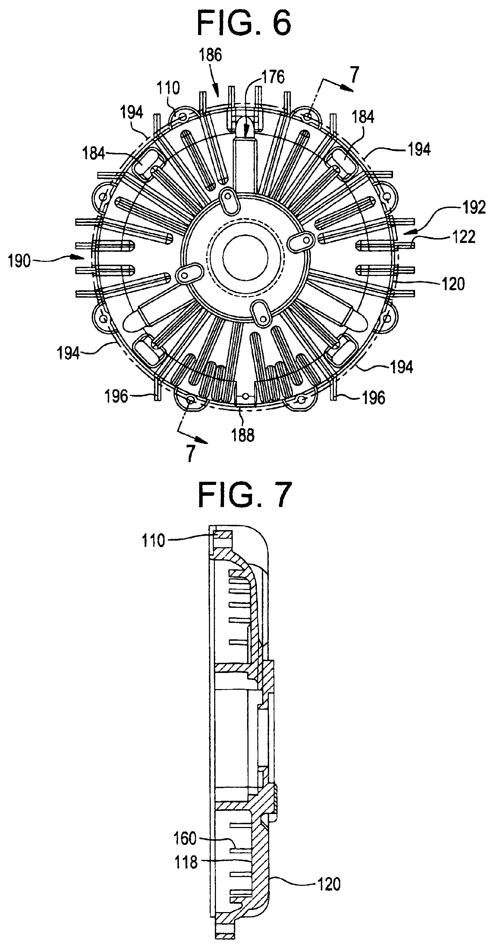

Figures 6 and 7 are a top view and a cross section, respectively, of first end shield 110 illustrating fins 122 , pins 160, and a plurality of air guides 184. Airflow 140 over totally enclosed fan cooled electric motor 100 is roughly classified as external flow over external surface 120 and between fins 122. External flow will show a velocity gradient along the axial length of motor 100 as airflow 140 diverges, i.e., the air velocity over housing 102 decreases along the axial direction. Additionally, end shield 112 typically has very low cooling due to the lack of air movement. In one embodiment, fins 122 are quadrant arranged fins 176, i.e., fins 122 project in one of four directions, top 186, bottom 188, left side 190, or right side 192. Quadrant arranged fins 176 include a plurality of quadrant corners 194 positioned at the intersection of adjacent quadrants, e.g., quadrant 186 and quadrant 190. One disadvantage of quadrant fin arrangement 176 is that airflow 140 exits fan 138 in quadrant corners 194. Airflow 140 exiting at quadrant corners 194 is generally of little cooling benefit because of the relatively wide spacing between fins 122 in that location. Airflow 140 can be improved by incorporating air guides 184 into end shield 110. Air guides 184 partially block airflow 140 through quadrant corner 194 in order to reduce the quantity of airflow 140 exiting a fan shield (not shown in Figures 6 or 7) at quadrant corners 194. A similar air guide may also be incorporated into the fan shield. In one embodiment, at least one air guide 184 is located on end shield 110. Air guides 184 direct airflow 140 from fan 138 to shell 104 along fins 122. Air guides 184, in one embodiment, are located on the upper half of end shield 110 and are formed unitary with end shield 110 during the fabrication process. Air guides 184 alter the direction of airflow 140 and help maintain airflow 140 in contact with external surface 120 of housing 102 along fins 122.

Airflow 140 exiting quadrant corners 194 can also be utilized to improve the cooling of end shield 112. Since airflow 140 exiting quadrant corners 194 is relatively unrestricted by adjacent cooling fins 122, the velocity gradient along the length of housing 102 has a lower magnitude compared to airflow 140 between channels formed by fins 122. This relatively high velocity air, present at quadrant corners 194, can be directed over the external surface 120 of end shield 112 by the use of an air deflector (not shown in Figures 6 or 7). By positioning the air deflectors on end shield 112, a portion of airflow 140 can be directed over external surface 120 of end shield 112 thereby increasing the convection heat transfer from external surface 120. The increased convection heat transfer from end shield 112 provides for increased overall or total heat transfer from motor 100.

Airflow 140 over external surface 120 is external flow because it is not bounded in one direction, i.e., airflow 140 can diverge away from external surface 120. Airflow 140 over bottom quadrant 188 is constrained to yield internal flow. Bottom quadrant 188 typically has fewer and smaller height cooling fins 122 in order to avoid interference with a mounting plate (not shown) or floor to which motor 100 is mounted. The reduced number and height of cooling fins 122 results in a lower total surface area and thus a lower convection heat transfer occurring over bottom quadrant 188. The convection heat transfer over bottom quadrant 188 can be improved by including fins 122 on bottom quadrant 188 to constrain airflow 140 and provide a section of internal flow. Airflow 140 over bottom quadrant 188 is constrained on either side by the outer most cooling fins 196, and by the floor or mounting base. A fan shield (not shown in Figures 6 or 7) provides for delivering air into bottom quadrant 188. By constraining air flow 122 over bottom quadrant 188, the magnitude of the velocity gradient is reduced yielding a higher average air velocity over external surface 120 and a resulting higher overall convection heat transfer.

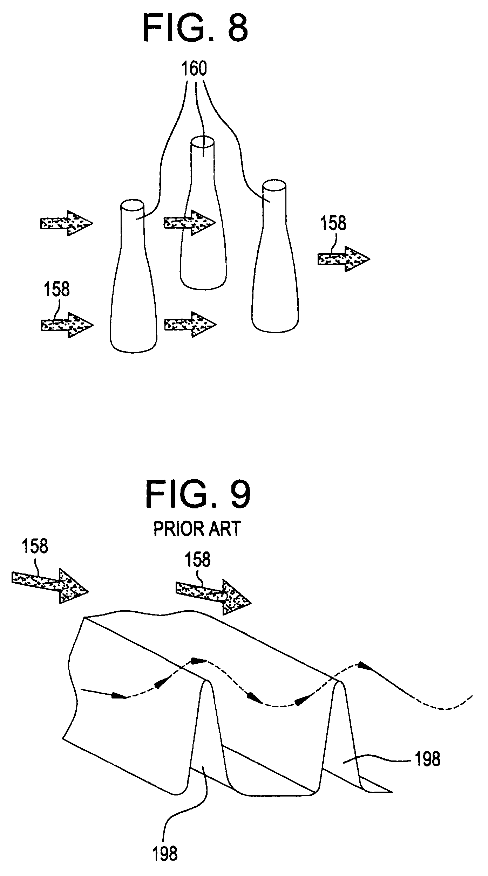

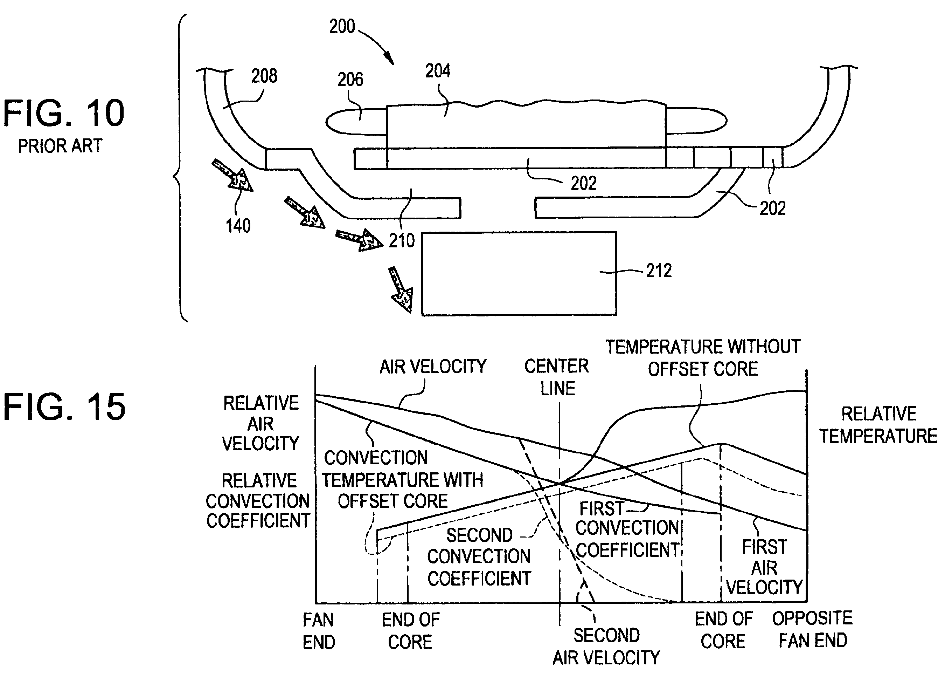

Figures 8 and 9 are schematic views of pins 160 and a plurality of well known ribs 198, respectively, illustrating the flow of a tangential component of internal air stream 158. In one embodiment, pins 160 extend radially from end shield 110 and project into air stream 158. Pins 160 increase the surface area of internal surface 118 and allow both radial and tangential velocity components of air stream 158 to flow over internal surface 118. Ribs 198 are well known in the art for increasing the area of internal surface 118 of housing 102. However, ribs 198 impede air stream 158 in the tangential direction with a resulting decrease in internal surface area 118 exposed to air stream 158. Pins 160 present more exposed surface areas in the direction of air stream 158 than ribs 198 and thus provide better heat dissipation than ribs 198.

Figure 10 is a schematic view of a well known electric motor 200 that includes a housing 202, a stator core 204, an end turn 206, an end shield 208, a lead channel 210, and a conduit box 212. Known totally enclosed fan cooled electric motors 200 are typically designed with a single lead channel 210 and conduit box 212 located at the approximate axial center of housing 202. Lead channel 210 is required to provide space to route the winding leads from end turn 206 to conduit box 212. Conduit box 212 can be positioned on either side of motor 200 by rotating housing 202 180 degrees. One disadvantage of single lead channel 210 and center mounted conduit box 212 is that lead channel 210 reduces the contact area between housing 202 and stator core 204, thus reducing the heat dissipation of housing 202. Another disadvantage of center mounted conduit box 212 is that an air flow 214 over housing 202 on the conduit box side of motor 200 is interrupted by conduit box 212, significantly reducing the convection cooling on the downstream side of conduit box 212.

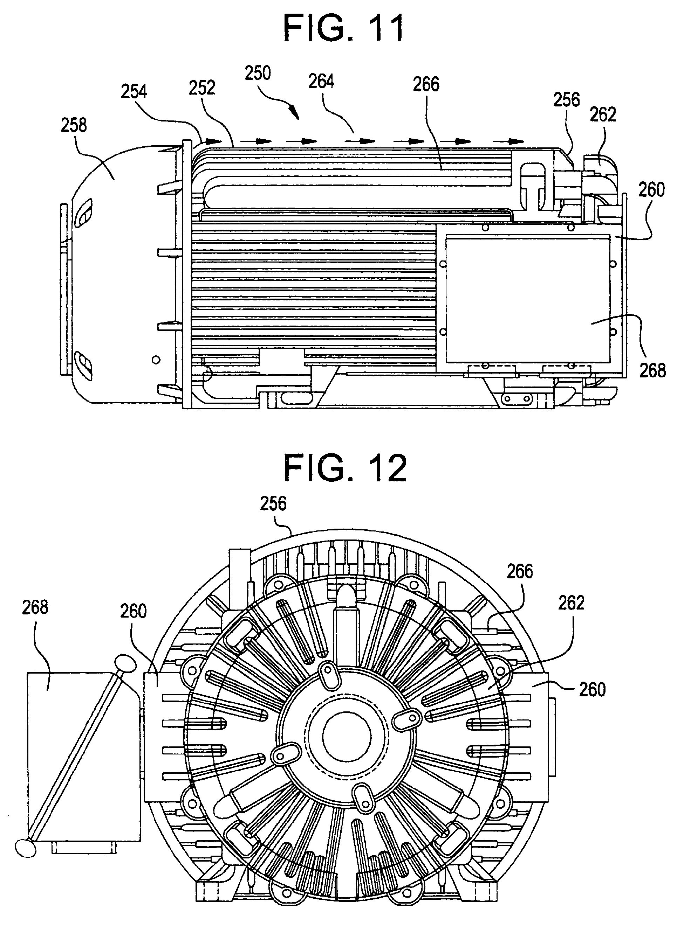

Figures 11 and 12 are a side view and an end view, respectively, of a motor 250 including a housing 252 having a first end 254 and a second end 256, a fan shield 258, two conduit box pads 260, and an end shield 262. Conduit box pads 260 are positioned at second end 256 of housing 252. An air flow 264 exits fan shield 258 and travels the length of housing 252 along a plurality of fins 266. In order to reduce the disturbance of air flow 264 caused by a conduit box 268 on motor 250, conduit box 268 can be mounted at second end 256 of housing 252. Motor 250 includes two conduit box pads 260 located at second end 256 to allow conduit box 268 to be mounted on either side of motor 250. Additionally, end mounted conduit box pads 260 are generally axially aligned with a stator end turn (not shown) where heat transfer is relatively poor. At first end 254 and second end 256 of housing 252, heat transfer is a combination of convection from the end turn to an inside of housing 252, conduction through housing 252, and then convection into air flow 264. The heat transfer through a center section of housing 252 is conduction through the stator core and into housing 252 and then convection into air flow 264.

Lower temperatures for conduit box 268 result from positioning conduit box at second end 256. Air flow 264 diverges as it moves along the length of housing 252. When conduit box pad is located relatively close to fan shield 258, air flow 264 is relatively close to housing 252. The convection cooling of conduit box 268 is dependent upon the velocity of air moving over the external surface of housing 252. By locating conduit box 268 at second end 256, the greatest surface area of conduit box 268 will be exposed to air flow 264. Conduit box 268 can be connected to end shield 262 and to housing 252. Alternatively, conduit box 268 can be connected only to housing 252.

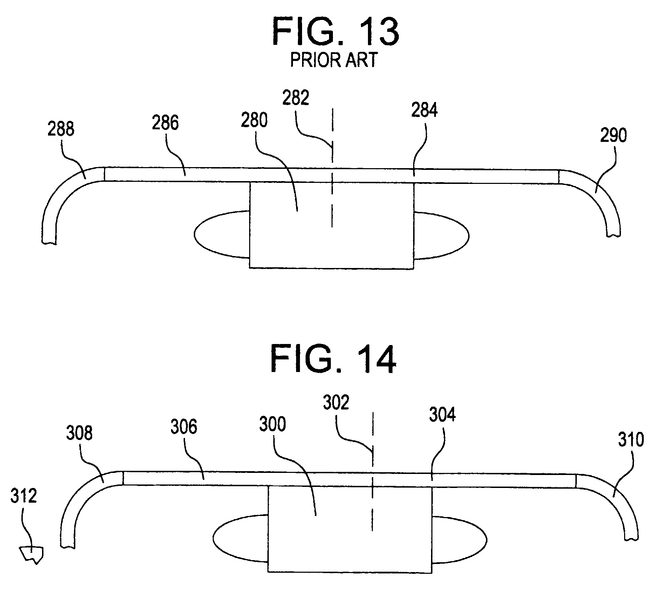

Figure 13 is a schematic view of a stator core 280 aligned, or centered, along an axial centerline 282 of a motor housing 284, as is well known in the art. Motor housing 284 includes a shell 286, a first end shield 288, and a second end shield 290. Many known totally enclosed can cooled electric motors typically include stator core 280 and a rotor core (not shown) centered along axial centerline 282. The centered cores in combination with a centered lead channel (not shown) and a conduit box mounting pad (not shown) allow simplified positioning of a conduit box (not shown) on either side of housing 284 by rotating housing 284 approximately 180 degrees. One disadvantage with centered cores is that the relative distance between the cores and the ends of shell 286 or end shields 288, 290 varies with the length of the cores.

Figure 14 is a schematic view of a stator core 300 offset from an axial centerline 302 of a motor housing 304. Housing 304 includes a shell 306, a first end shield 308, and a second end shield 310. Improvements in the overall heat transfer are obtained by offsetting stator core 300 and a rotor core (not shown) toward the fan end of housing 304. For example, stator core 300 and the rotor core are positioned closer to end shield 308 than to end shield 310. A fan 312 is located adjacent end shield 308. The air flow velocity over the external surfaces of housing 304 has a gradient where the velocity is highest near fan 312 and lowest at points farthest from fan 312. The external convection heat transfer is a function of the air velocity, the convection being highest in the areas of highest air velocity. Thus, positioning stator core 300 and the rotor core nearest end shield 308 provides for higher external convection. Additionally by positioning stator core 300 and the rotor core toward end shield 308, the relationship of the internal cooling circuit can be improved and heat can be transferred more readily from the ends of the rotor and stator core 300 to the relatively cool surfaces of end shield 308. Offseting the cores provides more cooling benefit when stator core 300 and the rotor core are short compared to shell 306.

Figure 15 is a graph of the external velocity and convection axial temperature gradient. An axial temperature gradient exists in the housing of any totally enclosed fan cooled motor due to the end nearest the fan being of lower temperature than the end farthest from the fan. By offsetting the stator core and rotor core toward the fan end, the axial temperature gradient provides a reduction in the total temperature of the internal components. The axial temperature gradient also provides some reduction in the average temperature of the internal components.

Figure 15 illustrates a first air velocity and a first convection coefficient over the external surface of a motor housing without a center mounted conduit box. A second air velocity and a second convection coefficient occur when the motor housing includes a center mounted conduit box. The second air velocity has approximately the same initial velocity as the first air velocity but rapidly decreases at about the axial centerline of the motor housing. Similarly, the second convection coefficient has approximately the same initial convection coefficient as the first convection coefficient but rapidly decreases at about the axial centerline of the motor housing. The air velocities and convection coefficients are relatively high at the fan end of the motor housing and decrease along the axial length of the motor housing towards the opposite fan end.

Figure 15 also illustrates a temperature of the motor with an offset core and an axially centered core. The offset core motor temperature is lower than the temperature of the axially centered core motor. Also, the temperature of the motor without the offset core, i.e., the motor with an axially centered core, rapidly increases at about the axial center of the motor housing if the motor housing includes a center mounted conduit box. In addition, the temperature of the motor with an offset core decreases more quickly towards the opposite fan end of the motor than does the motor with the axially centered core.

The bearing loading within motors is the sum of the rotor weight, electromagnetic forces, and application loading. In a motor with the stator and rotor cores centered, the rotor weight and electromagnetic forces are evenly distributed between the two bearings. One advantage of using an offset stator core and rotor core is that the relative portion of the rotor weight and electromagnetic forces can be shifted toward one end of the motor. In a typical application, the forces on the bearing farthest from the fan end of the motor are the application forces plus the rotor weight and electromagnetic forces. By offsetting the stator core and rotor core, the portion of the rotor weight and electromagnetic forces being supported by the opposite fan bearing can be reduced resulting in a longer bearing life. Since the application forces are typically much larger than the rotor weight and electromagnetic forces, the opposite fan end bearing typically has a much shorter life than the fan end bearing. When the stator core and rotor core are offset, the opposite fan end bearing will carry a reduced total loading with a resulting increase in life. The fan end bearing carries a slightly increased total loading but may still have a life longer than the opposite fan end bearing.

In addition, by offsetting the stator core and rotor core there is a decrease in the rotor shaft deflections caused by the rotor weight and electromagnetic forces. The deflection is decreased since the shaft deflects in an arc that passes through both bearings. Also, part of the electromagnetic forces are a function of the shaft deflection distance. Due to the reduced shaft deflection, the electromagnetic forces resulting from shaft deflection are also reduced, resulting in decreased shaft and bearing radial forces. The decreased electromagnetic forces will provide increased bearing life. Another benefit of the decreased deflections is that the lateral natural frequency of the shaft is increased. The increased natural frequency allows either higher speed operation or the use of a slightly smaller diameter shaft compared to a machine designed with the stator core and rotor core axially centered.

A further benefit of an offset stator and rotor core is simplified assembly. When the stator core is positioned in the housing, the relative distance between the fan end of the stator or rotor core and the fan end of the housing or rotor shaft can be constant thus allowing simplified positioning of equipment and fixtures. Motors with the stator core and rotor core centered in the housing sometimes require a unique length of the stator core and the rotor core have a unique location within the frame or shaft thus requiring fixtures and tooling to accommodate the variety of locations that may be required.

The totally enclosed fan cooled electric motor has increased heat dissipation due to increasing the flow of air over the external surface of the motor. Also, the internal surface area of the motor housing has been increased to increase the convection heat transfer of the internal components. In addition, multiple conduit box pads have been included at the opposite fan end of the motor to allow the elimination of the internal lead channel and to improve the heat transfer by reducing the air flow disturbance over the outside of the frame.

## Claims

1. A fan cooled electric motor (100) comprising:
a motor housing (102) comprising a shell (104) with first (106) and second (108) ends, a first end shield (110) mounted to said first shell end, and a second end shield (112) mounted to said second shell end, said first and second end shields comprising bearing supports (114) having bearings (1166) therein, said housing further comprising an internal surface (118) and an external surface (120), said external surface comprising a plurality of fins (122) and said internal surface comprising a plurality of pins (160), said fins and pins for increasing heat dissipation of said motor;
a stator (124) mounted in the housing and comprising a stator core (126) having a bore therethrough; and
a rotor (130) comprising a rotor core (132) having a bore therethrough and a substantially straight shaft (136) extending through said rotor core bore, said rotor rotatably mounted in said housing and extending through said stator bore, said shaft rotatably supported by said bearings.

2. An electric motor (100) in accordance with Claim 1 further comprising a first fan (138) external to said first end shield (110), said first fan (138) capable of producing a stream of air (140) that flows over said external fins (122).

3. An electric motor (100) in accordance with Claim 1 further comprising an internal air baffle (156) connected to said shell 104), said internal baffle for directing air flow (158) inside said housing (102).

4. An electric motor (100) in accordance with Claim 1 wherein said external fins (122) are arranged in a quadrant pattern (176).

5. An electric motor in accordance with Claim 1 wherein said first end shield (110) further comprises a plurality of quadrant corners (194) and at least one air guide (184) located at each quadrant corner.

6. An electric motor (100) in accordance with Claim 1 further comprising a plurality of air deflectors (144) to guide at least a portion of the air (140) over a face of the second end shield (112), said air deflectors connected to said housing (102).

7. An electric motor (250) in accordance with Claim 1 further comprising at least two conduit box pads (260) positioned at said shell second end (256), said conduit box pads configured to mount a conduit box (268) thereto.

8. An electric motor (100) in accordance with Claim 1 wherein said stator core (300) and said rotor core are positioned closer to said first end shield (308) than to said second end shield (310).

9. An electric motor (100) in accordance with Claim 3 further comprising a second fan (154) internal to said first end shield (110), said second fan (154) capable of producing a stream of air (158) that flows over said internal baffle (156) and said internal pins (160).

10. An electric motor in accordance with Claim 2 wherein said first fan (138) does not include a backing plate.

11. A fan cooled electric motor (100) comprising:
a motor housing (102) comprising a shell (104) with first (106) and second (108) ends, a first end shield (110) mounted to said first shell end, and a second end shield (112) mounted to said second shell end, said first and second end shields comprising bearing supports (114) having bearings (116) therein;
a stator (124) mounted in the housing and comprising a stator core (126) having a bore therethrough;
a rotor (130) comprising a rotor core (132) having a bore therethrough and a substantially straight shaft (136) extending through said rotor core bore, said rotor rotatably mounted in said housing and extending through said stator bore, said shaft rotatably supported by said bearings, said stator core and said rotor core positioned closer to said first end shield than to said second end shield;
a first fan (154) internal to said first end shield and positioned on said rotor core; and
at least one internal baffle (156) for directing airflow from said first internal fan.

12. An electric motor (100) in accordance with Claim 11 wherein said housing (102) further comprises an internal surface (118) and an external surface (120), said external surface comprising a plurality of fins (122) and said internal surface comprising a plurality of pins (160), said fins and pins for increasing heat dissipation of said motor.

13. An electric motor (100) in accordance with Claim 12 further comprising a second fan (138) external to said first end shield (110), said second fan for directing airflow (140) over said external fins (122).

14. An electric motor (100) in accordance with Claim 12 wherein said external fins (122) are arranged in quadrant patterns (176) that include quadrant corners (194), said first end shield (110) further comprising a plurality of air guides (184) located at said quadrant corners, said second end shield (112) further comprising at least one air deflector (144) configured to guide air over a face of said second end shield.

15. An electric motor (112) in accordance with Claim 13 wherein said rotor core (132) comprises an end ring (150) and said first fan (154) is formed from said rotor core end ring.

16. An electric motor (100) in accordance with Claim 11 further comprising a plurality of conduit box pads located (260), at least partially, on said second end shield (112), said conduit box pads configured to mount a conduit box (268) thereto.

17. A method for assembling a fan cooled electric motor (100), the motor including a motor housing (102) comprising a shell (104) with first (106) and second (108) ends, a first end shield (110) mounted to the first shell end, a second end shield (112) mounted to the second shell end, an internal surface (118), and an external surface (120), the external surface comprising a plurality of fins (122) and the internal surface comprising a plurality of pins (160), the fins and pins for increasing heat dissipation of the motor, a stator (124) mounted in the housing and comprising a stator core (126) having a bore therethrough, a rotor (130) comprising a rotor core (132) having a bore (134) therethrough and a shaft (136) extending through the rotor core bore, the rotor rotatably mounted in the housing and extending through the stator bore, said method comprising the steps of:
inserting the stator (124) into the housing (102);
inserting the rotor (130) into the stator;
connecting the first (110) and second (112) end shields to the housing; and
attaching a plurality of air deflectors (144) to the housing.

18. A method in accordance with Claim 17 wherein the fins (122) are arranged in a quadrant pattern (176) that includes a plurality of quadrant corners (184), said method further comprising the steps of:
connecting the air deflectors (144) to the shell second end (108);
forming a plurality of air guides (184) in the first end shield (110) at the quadrant corners (184); and
positioning a first fan (138) on the rotor shaft (136) external to the first end shield for providing an airflow (140) that is directed over the fins (122) and over at least a portion of the face of the second end shield (112) by the air guides and the air deflectors.

19. A method in accordance with Claim 17 wherein the housing (102) includes at least one internal baffle (156) and at least a second fan (154) internal to the first end shield (110), said method further comprising the steps of:
forming the second fan (154) from the rotor core (132); and
positioning the internal baffle (156) to direct airflow (158) from the second fan (154) to at least a portion of the stator (124), then over at least a portion of the first end shield (110), and then back to the second fan (154).

20. A method in accordance with Claim 17 wherein the steps of inserting the stator (124) into the housing (102) and inserting the rotor (130) into the stator comprise the steps of inserting the stator to a location that is closer to the first end (106) of the shell (104) than to the second end (108) of the shell, and inserting the rotor to a location that is closer to the first end of the shell than to the second end of the shell.
